# EUROPEAN PATENT APPLICATION

(11) **EP 1 286 316 A2**
(43) Date of publication of application: **26.02.2003**
(21) Application number: 02254940.6
(22) Date of filing: 12.07.2002
(51) Int. Cl.: G07F 7/00

(54) **Management system for vending machine and host computer vending machine management**

(30) Priority: 06.08.2001 JP 2001237811
(71) Applicant: Sanden Corporation, Isesaki-shi, Gunma 372-8502 (JP)
(72) Inventor: Ohtsuki, Takahiro, c/o Sanden Corporation, Isesaki-shi, Gunma 372-8502 (JP)
(74) Representative: Haley, Stephen

(57) **Abstract**

A portable communication terminal (300) obtains a program for terminals (115) from a host computer (110) and executes it. The program for terminals (115) obtains all or a part of data stored in a database server (111) from the host computer (110) and renews the obtained data. The renewed data is sent to the host computer (110), and the data in the database server (111) is renewed.

## Description

The present invention relates to a system for centrally managing vending machines and, in particular, to a system for managing vending machines using portable communication terminals.

Conventionally, a centralized management system for vending machines of this type is configured by connecting vending machines installed in various places and a management host using a private network. Consequently, the management host centrally manages an operating state, a sales state and the like of each vending machine. More specifically, each vending machine is provided with a plurality of product housing columns. In addition, the vending machine counts the number of products sold for each product housing column and periodically sends the number of products sold for each product housing column to the management host. The management host manages, for each vending machine, types of products housed in each product housing column of the vending machine and the number of sales of each product. Then, upon receiving the number of products sold for each product housing column from the vending machine, the management host checks a product housed in the product housing column and manages the number of sales of the product using the received number of products sold.

Incidentally, products housed in a vending machine are periodically changed according to seasonal variation and the like. A manager changes products housed in a product housing column by performing work for replacing them with other products. Then, after completing this work, the manager changes information on products housed in the product housing column in a management host.

However, such a management system has a problem in that accurate management of the number of products sold cannot be performed in some cases. For example, a problem occurs in a case in which a product is sold from a product housing column to which a change in products pertains and its sales information is sent to a management host after replacement work of products is performed in a vending machine and before information on changes following this work is reflected on the management host. That is, in this case, the number of sales of a product that is different from the product actually sold is changed in the management host.

The present invention has been devised in view of the above and other drawbacks, and it is an object of the present invention to provide a vending machine management system that is capable of performing an appropriate product sales management.

In order to attain the above-mentioned object, the present invention has the following configuration for solving the subject. That is, a first aspect of the present invention provides a management system for vending machine comprising: a vending machine; and a host computer for managing the vending machine connected via a network, wherein the host computer includes management information storage for storing management information on the vending machine and remote management controller for receiving an access from a portable communication terminal via a network and, wherein the portable communication terminal includes management information obtaining means for obtaining all or a part of the management information stored in the management information storage from the host computer via the network, management information renewing means for renewing the obtained management information, and management information sending means for sending the renewed management information to the host computer via the network.

According to the present invention, management information on the vending machine managed by the host computer can be renewed using the portable communication terminal. Consequently, if a manager performs maintenance of a vending machine, a change by the maintenance can be immediately reflected on the host computer. Therefore, the host computer can manage latest and appropriate information.

In addition, in the present invention, the portable communication terminal obtains all or a part of management information from the host computer and renews the management information in the portable communication terminal. Consequently, renewal work can be performed in a short time compared with a method in which the portable communication terminal renews management information while interacting with the host computer. This is because, since transmission and reception of data occur between the portable communication terminal and the host computer each time an operation is performed in the interactive renewal work, a large amount of work time is required, in particular, if a communication rate is low. In addition, such prolonged work also results in increase in communication costs. On the other hand, in the present invention, since renewal of management information is processed within the portable communication terminal, speedup of the work and reduction of communication time can be realized.

Other objects, elements and features of the present invention will be apparent in the following detailed description.

In the Drawings;

In the accompanying drawings:
FIG. 1 is a diagram of a vending machine management system;
FIG. 2 is a table explaining a configuration of a database;
FIG. 3 is a table explaining a configuration of a database;
FIG. 4 is a diagram of a portable communication terminal;
FIG. 5 is a flow chart explaining operations of the portable communication terminal;
FIG. 6 shows an example of a screen display of the portable communication terminal;
FIG. 7 shows an example of a screen display of the portable communication terminal; and
FIG. 8 shows an example of a screen display of the portable communication terminal.

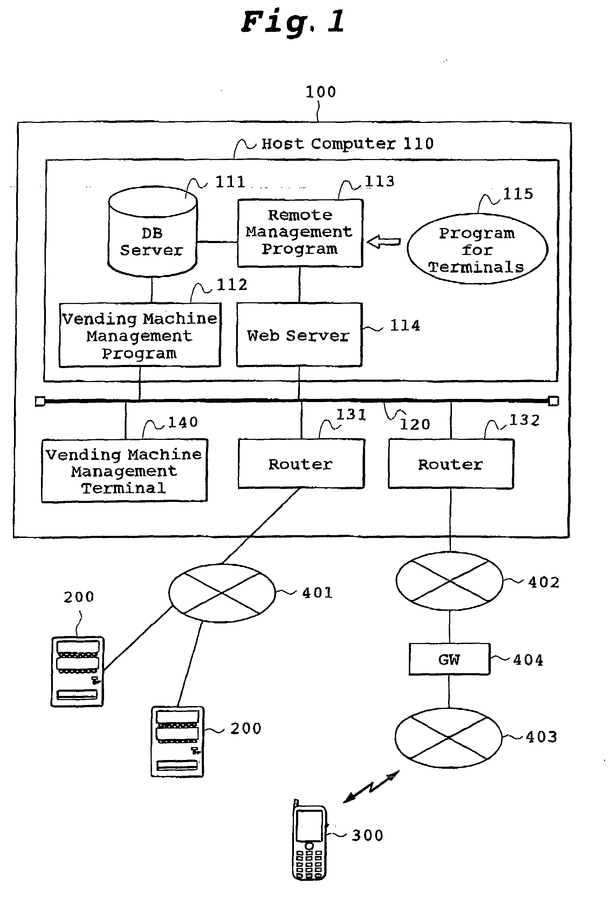

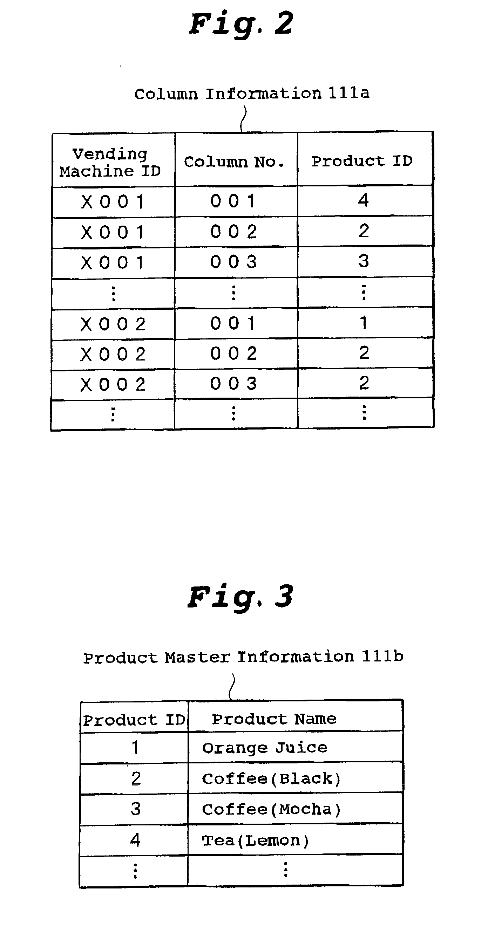

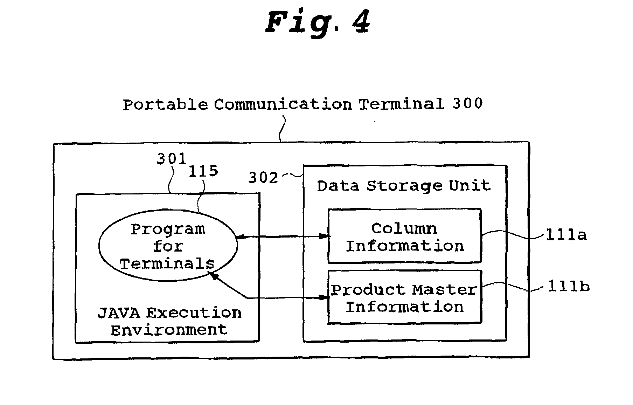

A vending machine management system in accordance with an embodiment of the present invention will be described with reference to the accompanying drawings. FIG. 1 is a diagram of the vending machine management system, FIGS. 2 and 3 are tables explaining a configuration of a database, and FIG. 4 is a diagram of a portable communication terminal.

As shown in FIG. 1, this vending machine management system is provided with a host computer 110 installed in a management company 100 of vending machines, and vending machines 200 and a portable communication terminal 300 that are connected with the host computer 110 via networks. Here, a form of the network connecting the host computer 110 and the vending machines 200 does not matter. In this embodiment, a packet communication network 401 utilizing a PHS is used. In addition, a form of the network connecting the host computer 110 and the portable communication terminal 300 does not matter either. In this embodiment, as-shown in FIG. 1, the host computer 110 and the portable communication terminal 300 are connected using the Internet 402, a wireless communication network 403 and a gate way device 404 interfacing the wireless communication network 403 with the Internet 402. In addition, a form of a communication protocol in this management system does not matter. In this embodiment, TCP/IP is used.

The host computer 110 is connected to an LAN 120 installed in the management company 100. A router 131 for connection with the packet communication network 401 and a router 132 for connection with the Internet 402 are connected to the LAN 120. In addition, a vending machine management terminal 140 operated by a manager in performing management work of the vending machine is connected to the LAN 120. This vending machine management terminal 140 receives vending machine management services from the host computer 110.

As shown in FIG. 1, the host computer 110 is provided with a database server 111 for storing various kinds of information on the vending machine, a vending machine management program 112 for providing the vending machine management terminal 140 with vending machine management services, a remote management program 113 for providing the portable communication terminal 300 with vending machine management services, and an WEB server 114 operating integrally with this remote management program 113.

As an example of data stored in the database server 111, column information 111a and product master information 11b will be described with reference to FIGS. 2 and 3, respectively. The column information 111a manages association information that indicates which product is housed in a product housing column of the vending machine 200. More specifically, as shown in FIG. 2, the column information 111a keeps at least vending machine IDs, column numbers and product IDs. In addition, the product master information 111b manages various kinds of information on products such as names. More specifically, as shown in FIG. 3, the product master information 111b keeps at least product IDs and product names. The database server 111 performs reference, input, renewal, deletion or the like of data in response to a request from the vending machine management program 112 or the remote management program 113.

The vending machine management program 112 connects with the vending machine 200 periodically or if necessary to collect various data from the vending machine 200. Then, the vending machine management program 112 stores the collected various data in the database server 111. On the other hand, the vending machine management program 112 provides various data stored in the database server 111 in a predetermined format or provides an interface for performing input, renewal, deletion or the like of various data in response to a request from the vending machine management terminal 140. Since processing of this vending machine management program 112 is the same as the conventional one, details concerning the processing will be omitted.

The remote management program 113 provides the portable communication terminal 300 with a service for accessing the data stored in the database server 111 in cooperation with the WEB server 114. More specifically, if a request for obtaining a program for terminals 115 is received from the portable communication terminal 300, the remote management program 113 sends the program for terminals 115 stored in the host computer 110 to the portable communication terminal 300. In addition, if a request for obtaining the product master information 111b is received from the portable communication terminal 300, the remote management program 113 obtains the product master information 111b from the database server 111 and transfers the information to the portable communication terminal 300. Similarly, if a request for obtaining the column information 111a is received, the remote management program 113 obtains the column information 111a from the database server 111 and transfers the information to the portable communication terminal 300. In addition, upon receiving the column information 111a from the portable communication terminal 300, the remote management program 113 renews data in the database server 111 with contents of the received column information 111a.

As shown in FIG. 4, the portable communication terminal 300 is provided with an environment for executing the program for terminals 115 obtained from the host computer 110. In this embodiment, since a JAVA (registered trademark) application is used as the program for terminals 115, the portable communication terminal 300 is provided with a JAVA execution environment 301. This JAVA execution environment 301 has a function of obtaining a program (JAVA application) via a network and executing the program. In addition, the portable communication terminal 300 is provided with a data storage unit 302. The column information 111a and the product master information 111b obtained from the host computer 110 by the execution of the program for terminals 115 are stored in the data storage unit 302.

A form of the portable communication terminal 300 does not matter as long as it can communicate with the host computer 110 and can execute the program for terminals 115 as described above. For example, the portable communication terminal 300 may be a compact computer device called a PDA added with a communication function or a cellular phone having a data communication function. In this embodiment, a cellular phone that can be connected to the Internet and can execute the JAVA application is used.

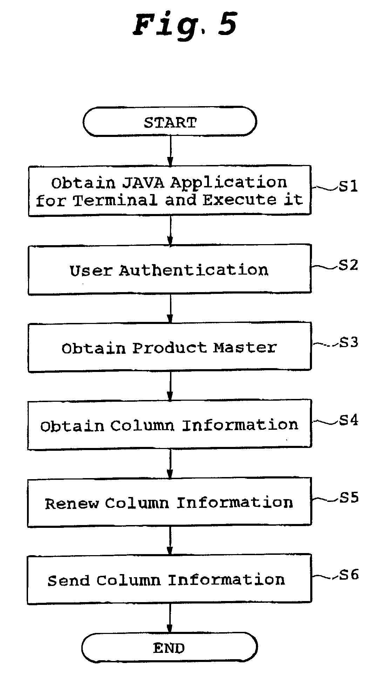

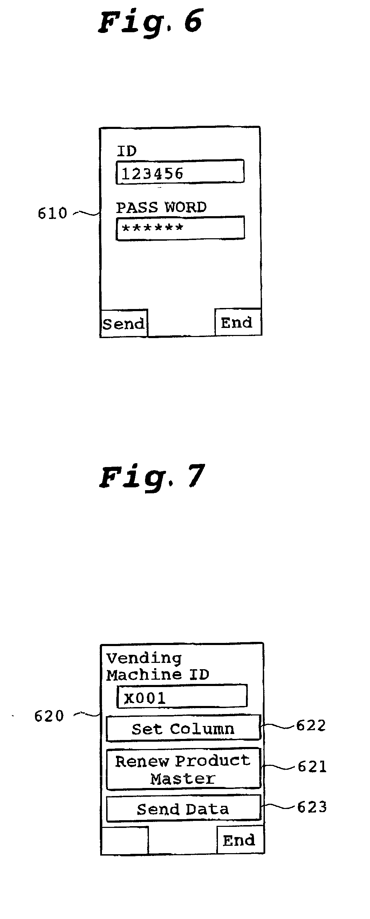

Next, remote management work by the portable communication terminal 300 in the vending machine management system in accordance with this embodiment will be described with reference to FIGS. 5 to 8. Here, a case in which, if products housed in the vending machine 200 have been changed, a manager who performed the changing work renews the column information 111a managed in the host computer 110 using the portable communication terminal 300 will be described. FIG. 5 is a flow chart explaining operations of the portable communication terminal and FIGS. 6 to 8 show an example of a screen display of the portable communication terminal, respectively.

The portable communication terminal 300 accesses the remote management program 113 of the host computer 110 to obtain the program for terminals 115 (step S1). Note that this step is unnecessary if the program for terminals 115 is already saved in the portable communication terminal 300. Then, the portable communication terminal 300 realizes the following processing by executing the program for terminals 115.

First, the program for terminals 115 performs user authentication (step S2). An example of a screen image of an authentication screen 610 at this point is shown in FIG. 6. In this user authentication, the program for terminals 115 urges a user to input a user ID and a password as shown in FIG. 6. Then, when the user ID and the password are inputted, the program for terminals 115 requests the remote management program 113 of the host computer 110 to perform user authentication and obtains an authentication result. When succeeding in the authentication of the user, the program for terminals 115 displays a menu screen 620 as shown in FIG. 7 and performs the following processing.

Upon detecting depression of a product master renewal button 621 in the menu screen 620, the program for terminals 115 obtains the product master information from the host computer 110 (step 3). More specifically, first, the program for terminals 115 requests the remote management program 113 to obtain the product master information. The remote management program 113 obtains the product master information 111b from the database server 111 in response to the request and transfers the information to the portable communication terminal 300. The program for terminals 115 stores the obtained product master information 111b in the data storage unit 302 of the portable communication terminal 300. Note that it is unnecessary to obtain the product master information unless the product master information 111b stored in the database server 111 is renewed.

Next, upon detecting depression of a column setting button 622 in the menu screen 620, the program for terminals 115 obtains column information from the host computer 110 (step S4). More specifically, first, the program for terminals 115 requests the remote management program 113 to obtain column information. In requesting, the program for terminals 115 sends a vending machine ID inputted in the menu screen 620 to the remote management program 113. The remote management program 113 obtains the column information 111a for a vending machine having the vending machine ID from the database server 111 in response to the request and transfers the information to the portable communication terminal 300. The program for terminals 115 stores the obtained column information 111a in the data storage unit 302 of the portable communication terminal 300.

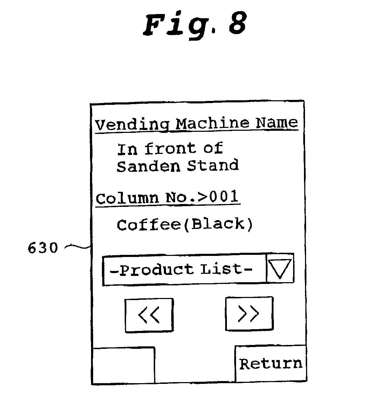

Next, upon obtaining the column information, the program for terminals 115 displays a product change screen 630 as shown in FIG. 8 and renews the column information 111a stored in the data storage unit 302 in response to an input of a user (step S5). At the time of this changing work, the program for terminals 115 refers to the product master information 111b stored in the data storage unit 302, thereby facilitating selection of a product by the user.

Next, upon detecting depression of a data transmission button 623 in the menu screen 620, the program for terminals 115 sends the column information 111a stored in the data storage unit 302 to the host computer 110 (step S6). Upon receiving the column information 111a from the portable communication terminal 300, the remote management program 113 of the host computer 110 renews the column information 111a of the database server 111 with contents of the received column information 111a.

In this way, according to the vending machine management system in accordance with this embodiment, since the column information managed by the host computer 110 can be renewed using the portable communication terminal 300, even if maintenance of the vending machine 200 is performed, information on a change following the maintenance can be immediately reflected on the host computer 110. Therefore, the host computer can always manage latest and appropriate information.

In addition, in this vending machine management system, a part of the column information managed by the host computer 110 is once obtained by the portable communication terminal 300, and the obtained column information is renewed using the program for terminals 115 running on this portable communication terminal 300. Then, the renewed column information is sent to the host computer 110, and the data of the database server 111 is renewed with contents of this column information. Consequently, renewal work can be conducted in a short time compared with the case in which the portable communication terminal 300 renews data of the database server 111 while interacting with the host computer 110. That is, since data communication between the portable communication terminal 300 and the host computer 110 is not performed during the renewal work, frequency of data communication that requires a relatively long time can be reduced. Consequently, speedup of the renewal work and reduction of communication time can be realized. In addition, communication cost can be reduced by reducing communication time if the communication cost is charged based on communication time.

Moreover, in this vending machine management system, since the program for terminals 115 running on the portable communication terminal 300 is obtained from the host computer 110, introduction of the system can be performed easily. In addition, even if the program for terminals 115 saved in the portable communication terminal 300 is lost due to some reason, it is sufficient to obtain the program from the host computer 110 again, the system is excellent is fault resistance. Moreover, since it is sufficient to obtain the program for terminals 115 only when this system is utilized, the program 115 can be erased in the other cases to effectively make use of a storage area of the portable communication terminal 300.

Although the embodiment of the present invention has been described, the present invention is not limited to this. A scope of the present invention is indicated by the scope of patent claims, and all modifications within the meaning of each claim are included in the present invention.

For example, although the JAVA application is shown as an example of the program for terminals 115 in this embodiment, the program may be written in other languages. In addition, a form of the network connecting each device and a communication protocol other than those described above may be used. Moreover, although the column information that is information on association between the product housing column and the housed products of the vending machine 200 is shown as an example of data renewed in the portable communication terminal 300 in this embodiment, the present invention can be applied to other data.

## Claims

1. A management system for vending machine comprising:
a vending machine (200); and
a host computer (110) for managing the vending machine (200) connected via a network (401),
wherein said host computer (110) includes management information storage (111) for storing management information on said vending machine (200) and remote management controller (113) for receiving an access from a portable communication terminal (300) via a network (402,403) and,
wherein said portable communication terminal (300) includes management information obtaining means for obtaining all or a part of said management information stored in said management information storage (111) from said host computer (110) via said network (402,403), management information renewing means for renewing said obtained management information, and management information sending means for sending said renewed management information to said host computer (110) via said network (402,403).

2. The system according to claim 1,
wherein each means of said portable communication terminal (300) functions by execution of a program (115) received from said host computer (110).

3. The system according to claim 1 or 2,
wherein said management information includes information on association between a product to be sold in the vending machine (200) and a product housing portion in which the product is housed.

4. The system according to any one of claims 1, 2 and 3,
wherein said management information obtaining means obtains management information on one vending machine (200) among management information stored in said management information storage (111).

5. A host computer (110) for managing vending machine (200) connected via a network (401), comprising:
management information storage (111) for storing management information on vending machine (200);
remote management controller (113) for receiving an access from a portable communication terminal (300) via a network (402,403);
sending means for sending a program (115) to the portable communication terminal (300) in response to a request from the portable communication terminal (300); and
wherein said program (115) causes said portable communication terminal (300) to functions as;
management information obtaining means for obtaining all or a part of said management information stored in said management information storage (111) from the host computer (110) via said network (402,403);
management information renewing means for renewing said obtained management information; and
management information sending means for sending said renewed management information to the host computer (110) via said network (402,403).
